# EUROPEAN PATENT APPLICATION

(11) **EP 1 181 865 A1**
(43) Date of publication of application: **27.02.2002**
(21) Application number: 00870182.3
(22) Date of filing: 23.08.2000
(51) Int. Cl.: A01N 1/02

(54) **Cryoprotective solutions**

(71) Applicant: UNIVERSITE CATHOLIQUE DE LOUVAIN, 1348 Louvain la Neuve (BE); Université de Liège, B-4000 Liège (BE)
(72) Inventor: Verhoeye, Francis, 7090 Braine-le-Comte (BE); Schneider, Yves-Jacques, 5500 Falmignoul (BE); Thonart, Philpppe, 5081 St. Denis (BE); Bare, Ghislain, 4031 Angleur (BE); Spyridon, Agathos, 1150 Bruxelles (BE)
(74) Representative: Brants, Johan Philippe Emile

(57) **Abstract**

The present invention deals with a novel class of (cryo)protective agents which can be used in combination with a permeating (cryo)protectant to protect living cells or tissues during the cryopreservation process and which replaces advantageously the use of animal serum or animal derived proteins. More specific, the present invention provides solutions for the preservation of cells, tissues and embryos at low temperatures comprising plant-derived peptides as protecting agent. The invention also provides methods for preparing these solutions. The invention further provides methods for the preservation of cells, tissues and embryos.

## Description

### Field of the invention

The present invention deals with a novel class of (cryo)protective agents which can be used in combination with a permeating (cryo)protectant to protect living cells or tissues during the cryopreservation process and which replaces advantageously the use of animal serum or animal derived proteins.

### Background of the invention

Long term cryopreservation of animal cells and tissues is of critical importance in the fields of biotechnology and of biomedical research. Cell banking systems serve as a source of animal material from various origins, including continuous cell lines, genetically engineered cell lines, embryos and sperm. Animal serum is a component routinely added to the freezing solution in order to improve the protection of animal cells during the freezing and thawing steps. However, serum is highly complex, displays variable influences from batch to batch and suffers from a high contamination risk (viruses, prions, endotoxin, etc). Therefore, cryopreservation processes based on solutions containing serum or animal-derived components must be heavily validated to ensure the safety of the biological material.

It becomes increasingly evident that for safety reasons, the use of serum-free and by extension animal protein free media will be largely recommended all along the entire process of animal cell culture technology.

The field of cryopreservation started with the discovery of the protective properties of glycerol for bull sperm (Polge *et a.l*, 1949). Subsequently, protective activities of compounds such as dimethysulfoxide (DMSO) in preventing freezing injury to living cells were reported (Lovelock and Bishop, 1959, Lewis *et al.,* 1967). Permeating cryoprotective agents such as DMSO and glycerol act by penetrating the cell and reducing the intracellular amount of ice formed during the freezing process.

There are also a variety of non-permeating protective agents. These agents include compounds such as polyvinylpyrrolidone, hydroxyethyl starch, monosaccharides and sugar alcohol. The mechanism of the non-permeating cryoprotective agents is not clear but may involve changes in colloidal osmotic pressure and modifications of the behaviour of cell membrane associated with water by ionic interaction. For some cells, combination of these two classes of cryoprotective agents may give optimal viability.

Another media component widely used in cryopreservation media is animal serum, despite documentation of its effectiveness at improving the freezing and the thawing processes being almost absent (Swin *et al.*, 1958; Shier and Olsen, 1995). Serum is highly complex and may add number of factors, which may interfere with cell functions.

Therefore, there is a need for the use of non-animal additives which can be added to the cryopreserving solution that protect animal cells and tissues from damage, that are non-toxic and are suitable for a wide range of cell types.

Existing cryopreservation media for animal cells in general comprise complex mixtures of amino acids, vitamins, carbohydrates, minerals, cryoprotective agents (e.g. glycerol, dimethysulfoxide, ethylene glycol, etc) and serum or animal-derived substitutes such as albumin.

Several polymers that do not enter the cell have demonstrated cryoprotective properties. Among these, we find molecules such as polyvinylpyrrolidone (PVP) (Klebe and Mancuso, 1983), dextran and hydroxyethylstarch (HES). Patent US 4,004,975 discloses the cryopreservation of leukocytes from centrifuged blood in a solution of hydroxyethyl starch and DMSO.

Furthermore, PCT WO 95/06068 discloses the use of polysaccharides to improve hematopoetic functions and Holtz *et al.,* (1991) deals with the use of saccharides such as glucose and sucrose in the cryopreservation of trout semen. Isotonic sucrose has also been reported as cryoprotective agent in a medium for mammalian cells (Shier and Olsen, 1995) but relevant results are found in combination with fetal calf serum. Patents WO 92/08347 and US 5,071,741 disclose the use of algae-derived polysaccharides such as agarose and alginate in a cryoprotective cell medium. Patent US 5,897,987 discloses the use of ultrarefined arabinogalactane in order to maintain the viability of a wide range of animal cells upon freezing, storage and thawing.

Patent US 5,985,538 and Stachecki *et al.* (1998) describe a cryopreservation and culture medium in which sodium chloride is replaced with choline chloride in a concentration of at least 100 mM but this medium is mainly targeted at the cryopreservation and thawing of oocytes.

Several simple, serum-free and inexpensive cryopreservation solutions have been developed including innocuous components. Patent US 5,580,714 discloses a cryopreservation solution composed of glycerol, alkali metal chloride salt, a monosaccharide and albumin. While being simple, this composition includes animal-derived material such as albumin reducing the safety of the cryopreservation medium. Merten *et al.* (1995) also details a serum-free medium for mammalian cell line but they restrict the description of the composition to its combination with serum-free MDSS2 culture medium. More recently, a protein-free medium formulation was described for the cryopreservation of mammalian cell lines but their strategy is strictly associated with the use of a specific basal medium called SMIF and to some cell lines such as the CHO, BHK and MDCK cell lines (Hesse *et al.*, 1999).

### Summary of the invention

It is an aim of the present invention to provide solutions for the preservation of cells at low temperatures.

It is a further aim of the present invention to provide serum-free and animal protein free solutions for the preservation of various types of animal cells, tissues and embryos at low temperatures.

It is another aim of the present invention to provide methods for preservation of cells, tissues and embryos at low temperatures.

This invention is directed to serum-free (cryo)preservation solutions that comprise the use of peptides obtained by enzymatic hydrolysis of vegetal proteins instead of animal serum and which are useful for maintaining the viability of various types of living animal cells and tissues upon cooling, freezing, storage and thawing.

The hydrolyzed protein material of the present invention is characterized by an average peptide chain length smaller than about 15 amino acid residues with a molecular weight of the majority of the peptides in the plant extract lower than 1000 Dalton and a relatively high level of free amino acids as disclosed in patent US 5,741,705.

There is abundant prior art on the hydrolysis of proteins but mainly the use in food products or the use in media to grow micro-organisms is described. Two types of protein hydrolysates can be distinguished:
1) hydrolysates comprising peptides with a mean chain length above 15 amino acid residues and a relatively low level of free amino acids
2) hydrolysates comprising peptides with a chain length below 15 amino acids and a relatively high level of free amino acids (patent US 5,741,705).

Hydrolysates from the second group are mainly used in the fermentation industries and in the animal cell culture field. The prior art describes the use of plant-derived peptides instead of serum in cell culture media (Heideman *et al.,* 2000, and patent WO 98/15614). On the other hand, the use of heat-stable plant proteins in an ethylene glycolbased solution for the vitrification of bovine embryos has been described (Palasz *et al.,* 1997).

However there is no description in the prior art of the use of plant-derived peptides in animal cell or tissue cryopreservation.

As such peptides derived from the hydrolysis of vegetal proteins provide a simple, inexpensive and a safer alternative to the use of serum or animal-derived proteins in a standard freezing medium for animal cells or tissues in a formulation possibly associated with a cryoprotective agent such as DMSO or ethylene glycol.

### Detailed description of the invention

According to a first embodiment, the present invention relates to a solution for preservation of cells at low temperatures comprising plant-derived peptides as a protecting agent.

In the present invention, the term "cell" should be understood as relating to single cells as well as to cells integrated into multicellular systems. As such, the term "cell" relates to cells chosen from but not restricted to bacterial cells, fungal cells, yeast cells, animal cells and plant cells. The invention thus also relates to a cell which is part of a tissue, an organ, an embryo or a complete organism. As such the invention also relates to a solution for preservation of tissues, organs, embryos and complete organisms.

In the context of the present invention, the term "protecting agent" refers to a compound which is used at low temperatures and which enhances post-thaw survival, generally by limiting the crystrallisation of water. In this respect also the term "cryoprotective agent" or "cryoprotectant" is used.

According to a further embodiment, the present invention relates to a solution for preservation of cells as defined above comprising a mixture of a cell permeating protecting agent and a (cell) non-permeating protecting agent wherein said (cell) non-permeating protecting agent comprises plant-derived peptides.

In literature reference is made to both permeating and non-permeating (cryo) protective agents. Both categories seem to act directly on the cell membranes and a combination of these two classes of protecting agents may give optimal viability.

Permeating agents include but are not limited to DMSO, glycerol, methanol and 1,2-propanediol. Non-permeating agents include polyvinylpyrrolidone, hydroxyethyl starch, saccharides (trehalose, glucose, lactose, maltose, sucrose), sugar alcohols, polyethylene glycol and macromolecules like albumin, glycopeptides and animal serum proteins.

Surprisingly, the present inventors found that plant-derived peptides can be used together with cell permeating agents in a solution for enhancing the survival of cells when stored at low temperatures. In a preferred embodiment of the present invention, these "plant-derived peptides" are derived from hydrolyzed plant proteins. These plant-derived peptides and proteins can be from monocotyledonous plants and dicotyledonous plants including a fodder or forage legume, ornamental plant, food crop, tree, or shrub selected from the list comprising amaranth, artichoke, asparagus, broccoli, brussels sprout, cabbage, canola, carrot, cauliflower, cereals, celery, collard greens, colza, cottonseed, corn, flax, kale, lentil, oilseed rape, okra, onion, pea, potato, rice, salad, soybean, straw, sugarbeet, sugar cane, sunflower, tomato, squash, tea and wheat amongst others, or the seeds of any plant named above or from a tissue, cell or organ culture of any of the above named species.

According to another embodiment the invention relates to a solution as defined above for the preservation of cells at low temperatures wherein said cell permeating protecting agent is present in a concentration of 2 to 20% (volume/volume (v/v)) and said cell non-permeating protecting agent is present in a concentration of 0.025-5% (weight/volume (w/v)).

The concentration ranges wherein the cell permeating agent can be used is dependent on the nature of the molecule used. For instance DMSO is usually applied in concentrations between 5 and 10 %, preferably 5%, 6%, 7%, 8%, 9% or 10% , whereas for instance ethylene glycol can be applied in the range of 5 to 20 %, preferably 5%, 6%, 7%, 8%, 9% 10%, 11%, 12%, 13%, 14%, 15%, 16%, 17%, 18%, 19% or 20%. It should be understood that variations to these concentrations lay within the context of the present invention.

Accordingly, the concentration of the plant-derived peptides ranges between 0.025 and 2.5 % (w/v). These are weight/volume concentrations and respond to between 0.25 mg/ml and 25 mg/ml. It is obvious that all concentrations lying between these margins can be used and are dependent on the nature of the cell, tissue, organ, and organism to be stored at low temperature and/or for the time period or circumstances of preservation.

In a preferred embodiment the invention relates to a solution as described above wherein said cell permeating agent comprises 2 to 20 % DMSO or 5-20% ethylene glycol.

According to another preferred embodiment, the invention relates to a solution as described above comprising at least 0.1 mg/ml plant-derived peptides.

The invention further relates to any of the solutions defined above, further comprising sodium chloride, potassium chloride, calcium chloride, choline chloride, sodium phosphate and potassium phosphate.

The present invention also relates to a solution as described wherein the plant-derived peptides are further characterized by an average peptide chain length shorter than 15 amino acid residues. Preferably these chain length is 1, 2, 3, 4, 5, 6, 7, 8, 9, 10, 11, 12, 13, 14 or 15 amino acids long.

According to a further embodiment, the plant-derived peptides have a mean molecular weight of less than 1000 Dalton.

In a preferred embodiment, the invention relates to a solution as described above wherein said plant-derived peptides are derived from hydrolysed plant proteins and wherein the free amino acid level is less than about 40 percent, preferably less than 15 percent, more preferably less than 5 percent by weight of the hydrolysed protein material and the length of the peptides is preferably less than 15 amino acids.

The invention also relates to a method for the preparation of any of the solutions of the invention.

The invention further relates to a method for the preservation of cells at low temperatures comprising the use of any of the solutions defined in the invention.

Any of the methods of the invention may be applied at a temperature which is below -45°C. Preferably, the method of the invention is applied within a temperature range of -70°C to -196°C.

The invention further relates to any of the methods of the invention wherein to the solution for preserving cells at low temperatures is also added a compound selected from the group consisting of the amino acids, the vitamins, the coenzymes, the inorganic salts, the nucleic acid derivatives, the hormones, the growth factors, the lipids and the sugars. This group consists of, but is not limited to the following compounds:
- amino acids (including taurine, L-alanyl-L-glutamine and Glycyl-L-Glutamine),
- vitamins (D-Ca pantothenate, choline chloride, folic acid, inositol, nicotinamide, pyridoxine HCI, riboflavin, thiamine HCI, pyridoxal HCI, alpha-tocopherol, ascorbic acid, calcipherol, Biotin, menadione, vitamin A, vitamin B12, Para-aminobenzoic acid),
- coenzymes (CoA, DPN, FAD, TPN, TPP, UTP),
- inorganic salts (calcium salts, ferric salts (Fe(NO₃).9H₂O ; FeSO₄.7H₂O, copper salts (CuSO₄.5H₂O), potassium salts, sodium salts, zinc salts, magnesium salts (MgSO₄.7H₂O), selenium salts),
- nucleic acid derivatives (deoxyadenosine, deoxyguanosine, deoxycytidine HCI, 5-methylcytosine),
- hormones (triiodothyronine, insulin, dexamethasone, thyroxyn, prostaglandins (PGE), estradiol, testosterone, glucagon, growth hormone, progesterone, prolactin, TRH, somatostatin, FSH(follicle-stimulating hormone), parathyroid hormone),
- growth factors (epidermal growth factor, fibroblast growth factor, erythropoeitin, somatomedins (IGF), platelet-derived growth factor, nerve growth factor, transforming growth factor, colony-stimulating factor),
- lipids (saturated and unsaturated fatty acids (linoleic acid and arachidonic acid), cholesterol, lipoproteins, phospholipids, triglycerides), and
- Other components: glucose and related sugars, glutathione, phenol red, hypoxanthine, putrescine, fetuin, glucuronolactone, glucuronic acid, sodium pyruvate, butyrate, tween 80, thymidine, pluronic acid (e.g. Pluronic F68), ethanolamine, transferrin, 2-mercaptoethanol, DL-68 thioctic acid, albumin).

The invention preferably relates to a method for the preservation of cells at low temperatures as described above wherein said cells are chosen from bacterial cells, yeast or fungal cells, animal cells and plant cells, or wherein said cells are comprised in a tissue, organ, embryo or organism.

According to the invention, also the cryopreserved cells, tissues, organs, non-human embryos or non-human organisms obtainable by a method as described above form part of the invention.

The invention, now being generally described, will be more readily understood by reference to the following tables, figures and examples, which are included merely for purposes of illustration of certain aspects and embodiments of the present invention and are not intended to limit the invention.

### FIGURE LEGENDS

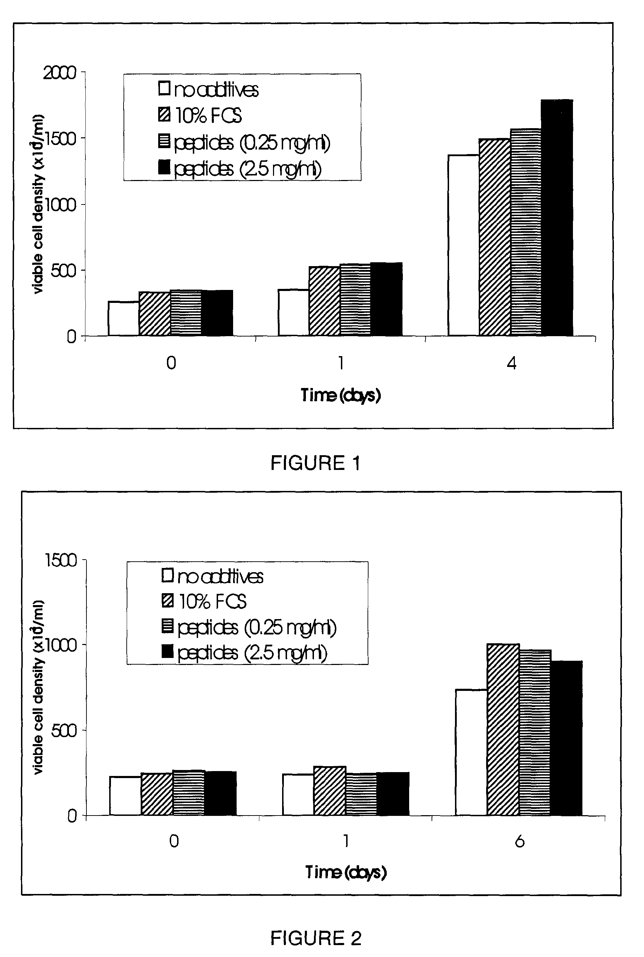

### Figure 1: Post-thaw CHO-K1 cell growth

Cultivation diagrams of the post-thaw growth of CHO-K1 cells previously adapted to suspension and to serum-free medium. The diagrams show the comparison between CHO-K1 cell densities from cultures started with cells cryopreserved in BDM medium with no additives ( ), in FCS-containing BDM medium 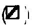 and in BDM medium supplemented with plant derived peptide solution (0.25 mg/ml 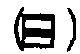 or 2.5 mg/ml (■)).

### Figure 2: Post-thaw THP-1 cell growth

Cultivation diagrams of the post-thaw growth of THP-1 cell suspensionss previously grown in serum-containing medium. The diagrams show the comparison between THP-1 cell densities from cultures started with cells cryopreserved in BDM medium with no additives ( ), in FCS-containing BDM medium ( 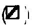 ) and in BDM medium supplemented with plant derived peptide solution (0.25 mg/ml 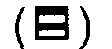 or 2.5 mg/ml (■)).

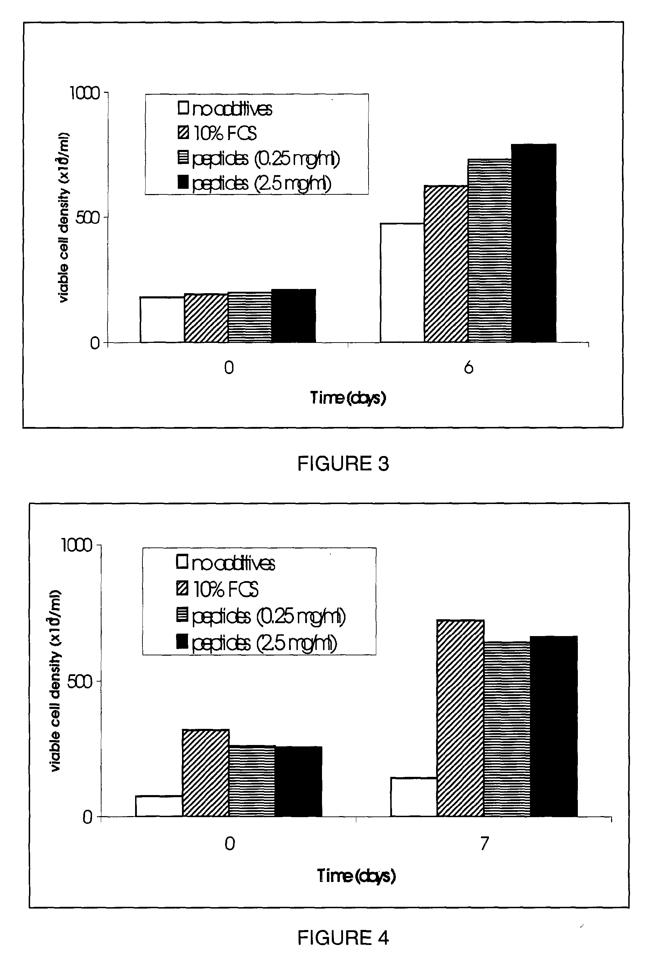

### Figure 3: Post-thaw EA.hy.926 cell growth

Cultivation diagrams of the post-thaw growth of adherent Ea.Hy. 296 cells previously grown in serum-containing medium. The diagrams show the comparison between adherent Ea.Hy. 296 cell densities from cultures started with cells cryopreserved in BDM medium with no additives ( ), in FCS-containing BDM medium ( 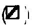 ) and in BDM medium supplemented with plant derived peptide solution (0.25 mg/ml 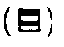 or 2.5 mg/ml (■)).

### Figure 4: Post-thaw SMC cell growth

Cultivation diagrams of the post-thaw growth of adherent porcine SMC cells previously grown in serum-containing medium. The diagrams show the comparison between adherent porcine SMC cell densities from cultures started with cells cryopreserved in BDM medium with no additives ( ), in FCS-containing BDM medium ( 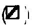 ) and in BDM medium supplemented with plant derived peptide solution (0.25 mg/ml 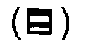 or 2.5 mg/ml (■)).

### EXAMPLES

### Example 1. Cryopreservation of animal cell lines in plant-derived peptide containing medium

### 1.Materials and methods

The cell lines tested in this example are: Chinese Hamster Ovary cell line (CHO-K1, ATCC CCL 61); Human peripheral blood monocyte cell line (THP-1, ECACC 880 81 201); Human endothelial cell line (EA.hy.926 from Dr B. Graham, Chapel Hill University of North Carolina). A primary cell type consisting of smooth muscle cells (SMC) originated from porcine arteries was also tested.

CHO-K1 cells previously adapted to suspension were cultivated using the serum-free CHO-BDM-S2.2 medium. CHO-BDM-S2.2 refers to a culture medium based on BDM (Schneider, 1989) supplemented with L-glutamine (2 mM), pluronic F68 (0,1%), transferrin (10 µg ml⁻¹), insulin (10 µg ml⁻¹), ethanolamine (2 µg ml⁻¹) and a peptide solution obtained by hydrolysis of rice proteins (250 microgram per ml). All cultivations were performed in a 5% CO2 incubator at 37°C.

THP-1 cells were cultivated in suspension using a RPMI-1640 medium supplemented with 10% fetal calf serum and EA.hy.926 were cultivated in DMEM/Ham's F12 medium supplemented with 10% fetal calf serum. Porcine smooth muscle cells were cultivated in a BDM medium supplemented with L-glutamine (2mM) and 10% fetal calf serum.

Peptides obtained by hydrolysis of rice proteins were prepared as a 2.5% (weight/volume) concentrated stock dissolved in a buffered isotonic salt solution. This concentrated stock was then used in combination with culture medium and DMSO.

Each of the above cells were frozen in the following manner:
CHO-K1 cell suspensions were concentrated and 1.10⁷ cells were diluted in 1.8 ml of the following media:
   - BDM medium supplemented with 10% DMSO,
   - BDM medium supplemented with 10% DMSO and 10% fetal calf serum,
   - BDM medium supplemented with 10% DMSO and 0.25 mg/ml or 2.5 mg/ml of a peptide solution obtained by hydrolysis of rice proteins.
THP-1 cell suspensions were concentrated and 9.10⁶ cells were diluted in 1,8 ml of the following media:
   - RPMI -1640 medium supplemented with 10% DMSO,
   - RPMI -1640 medium supplemented with 10% DMSO and 10% fetal calf serum,
   - RPMI -1640 medium supplemented with 10% DMSO and 0.25 mg/ml or 2.5 mg/ml of a peptide solution obtained by hydrolysis of rice proteins.
Confluent EA.hy.926 cells were trypsinised, concentrated and 9.4 10⁶ were diluted in 1.8 ml of the following media:
   - DMEM/Ham's F12 medium supplemented with 10% DMSO,
   - DMEM/Ham's F12 medium supplemented with 10% DMSO and 10% fetal calf serum,
   - DMEM/Ham's F12 medium supplemented with 10% DMSO and 0.25 mg/ml or 2.5 mg/ml of a peptide solution obtained by hydrolysis of rice proteins.
Porcine smooth muscle cells were trypsinised, concentrated and 4.10⁶ cells were diluted in 1.8 ml of the following media:
   - BDM medium supplemented with 10% DMSO,
   - BDM medium supplemented with 10% DMSO and 10% fetal calf serum,
   - BDM medium supplemented with 10% DMSO and 0.25 mg/ml or 2.5 mg/ml of a peptide solution obtained by hydrolysis of rice proteins.

Vials were transferred to a -80°C freezer for storage during one week. The effect of the different freezing media on the recovery and the viability of the different cell types after freezing and thawing was determined by testing immediate post-thaw cell viability by using the trypan blue exclusion assay (table 1). Cell number at days 1 and 4 for CHO-K1 cells, days 1 and 6 for THP-1, 6 forEA.hy.926 cells or 7 for porcine smooth muscle cells was studied in order to monitor the post-thaw growth of the different cell lines (see figures 1, 2, 3 and 4).

**Table 1**

| | Cryopreservation Without additives | | Cryopreservation With 10% FCS | | Cryopreservation With peptide solution | | | |
|---|---|---|---|---|---|---|---|---|
| | | | | | 0.25 mg/ml | | 2.5 mg/ml | |
| | Recovery | Viability | Recovery | Viability | Recovery | Viability | Recovery | Viability |
| CHO-K1 | 79% | 80% | 94% | 87% | 99% | 87% | 99% | 87% |
| THP-1 | 68% | 88% | 72% | 90% | 83% | 88% | 82% | 91% |
| EA.hy.926 | 90% | 79% | 91% | 92% | 93% | 90% | 96% | 96% |
| SMC | 20% | 60% | 80% | 96% | 64% | 87% | 66% | 90% |

### Example 2. Use of plant-derived peptides in the cryopreservation of embryos

Embryos are produced through in vitro fecundation. Oocytes are collected from cow ovaries stored at 25°C in physiological saline solution, selected under binocular and fertilized in vitro. Thereafter, matured oocytes are cultivated in conditioned serum free medium for 7 days and blastocysts are selected for freezing while degenerated embryos are discarded.

Embryos are then equilibrated for 10 minutes with the following equilibrium media:
- OCM medium with 20% FCS and 10% ethylene glycol (medium A)
- OCM medium with 25 mg/ peptide solution and 10% ethylene glycol (medium B)

OCM refers to an equilibrium medium containing CaCl₂.H₂O (0.14 mg/L), KCI (0.2 mg/L), KH₂PO₄ (0.2 mg/L), NaCI (8 mg/L), MgCl₂.6H₂O (0.1 mg/L), Na₂HPO₄.7H₂O (2.16 mg/L), D-glucose (1 mg/L), Phenol Red and Sodium pyruvate (0.036 mg/L) (Life Technologies, ref.: 11100)

After equilibration, the embryos are loaded into 0.25 cc straws which are abruptly cooled to -7°C, cooled at 0.3°C per minute to -35°C and then immersed into liquid nitrogen for storage. To thaw the frozen embryos, straws are removed from liquid nitrogen and are warmed in a room temperature water bath (25°C). After a few seconds, the glass transforms into the liquid phase. The cryopreservation medium containing the embryos is then removed from the straw and washed for 5 minutes into a petridish containing OCM medium without ethylene glycol.

Thereafter, the thawed embryos are cultivated for 48 hours into synthetic fluid medium (SOF) containing 5% FCS and bovine oviduct cells.

**Table 2**

| | Recovery | Expanded (24 hours) | Survival (48 hours) |
|---|---|---|---|
| Medium A | 70% | 30% | 30% |
| Medium B | 100% | 30% | 40% |

In conclusion, peptides obtained by hydrolysis of vegetal proteins represent a simple, inexpensive and more safe alternative to serum and animal proteins in a standard freezing medium for animal cells or tissues, in a formulation associated with a cryoprotective agent such as DMSO or ethylene glycol.

### REFERENCES

Heideman R., Zhang C., Qi H., Rule J. L., Rozales C., Park S., Chuppa S., Ray M., Michaels J., Konstantinov K. and D. Naveh (2000). The use of peptones as medium additives for the production of a recombinant therapeutic protein in high density perfusion cultures of mammalian cells. **Cytotechnology**, 32: 157-167.

Hesse,K., Scharfenerg, R. and R. Wagner (1999). Cryopreservation under protein-free medium conditions: a reliable way to safe cell banking. **Animal Cell Technology: Products from cells, cells ad products,** 501-503.

Holtz, et al, (1991). A simple saccharide extender for cryopreservation of rainbow trout (Oncorhynchus Mykiss) sperm. **Fourth Intern. Symp. Repr. Phys. Fish.**

Klebe and Mancuso. Identification of new cryoprotective agents for cultured mammalian cells. **In Vitro**, 19: 167-170 (1983)

Lewis J. P., Passovoy M., McFate P. A. and F. E. Trobaugh (1967). The rate of growth and pattern of differentiation of transplanted, frozen and thawed hematopoeitic cells. **Transplantation** 5: 435-443.

Lovelock J. E. and M. W. H. Bishop (1959). Prevention of freezing damage to living cells. **Nature** 183: 1394.

Mazur P. (1970). Cryobiology: the freezing of biological systems. **Science** 168(934): 939-949.

Merten, Petres and Couve. A simple serum-free freezing medium for serum-free cultured cells. **Biologicals** 23 (2): 185-189 (1995)

Palasz A.T., Gustafsson, H. Rodriguez-Martinez, H., Gusta, L., Larsson, B. and R.J. Mapletoft (1997). Vitrification of bovine IVF blastocysts in an ethylene glycol/sucrose solution and heat-stable plant-extracted proteins. **Theriogenology,** 865-879.

Polge C., Smith A. U. and A. S. Parkes (1949). Revival of spermatozoa after vitrification and dehydration at low temperatures. **Nature** 164: 666.

Shier, W.T. and S.G. Olsen (1995). Isotonic sucrose improves cryopreservation of cultured mammalian cells. **In Vitro Cell. Dev. Biol.,** *31*: 336-337.

Stachecki, J.J. Cohen J. and Steen Willadsen (1998). Detrimental effects of sodium during oocyte cryopreservation. **Biol. Repr.** *59*: 395-400.

Swin H. E., Haff R. F. and R. F. Parker (1958). Some practical aspects of storing mammalian cells in the dry-ice chest. **Cancer Res.** 18: 711-717.

## Claims

1. A solution for the preservation of cells (and tissues) at low temperatures comprising plant-derived peptides as a protecting agent.

2. A solution according to claim 1 comprising a mixture of a cell permeating protecting agent and a (cell) non-permeating protecting agent wherein said (cell) non-permeating protecting agent comprises plant-derived peptides.

3. A solution according to claim 2 wherein said cell permeating protecting agent is present in a concentration of 2 to 20% (v/v) and said cell non-permeating protecting agent is present in a concentration of 0.025-5% (w/v).

4. A solution according to claim 2 or 3 wherein said cell permeating protecting agent comprises 2 to 20 % DMSO or 5-20% ethylene glycol

5. A solution according to any of claim 2 to 4 comprising at least 0.01 % plant-derived peptides.

6. A solution according to any of claims 1 to 5 further comprising sodium chloride, potassium chloride, calcium chloride, choline chloride, sodium phosphate and potassium phosphate.

7. A solution according to any of claims 1 to 6 wherein said plant-derived peptides are derived from hydrolyzed plant proteins.

8. A solution according to any of claims 1 to 7 wherein said plant-derived peptides are further **characterized by** an average peptide chain length shorter than 15 amino acid residues.

9. A solution according to any of claims 1 to 8 wherein said plant-derived peptides have a mean molecular weight of less than 1000 Dalton.

10. A solution according to claim 7 wherein the free amino acid level is less than about 40 percent, preferably less than 15 percent, more preferably less than 5 percent by weight of the hydrolyzed protein material and the length of the peptides is preferably less than 15 amino acids.

11. A solution according to claim 7 wherein said plant proteins are from wheat, cottonseed, corn, pea, rice, soy, colza, cereals, cabbage, carrots or salad.

12. Method for the preparation of a solution as defined in any of claims 1 to 11.

13. A method for the preservation of cells at low temperatures comprising the use of a solution according to any of claims 1 to 11.

14. A method according to claim 13 wherein the temperature for the preservation of cells is lower than -45°C.

15. A method according to claim 14 wherein said cells are preserved within a temperature range of -70°C to -196°C.

16. The method according to any of claims 13 to 15 wherein to the solution for preserving cells at low temperatures is also added a compound selected from the group consisting of the amino acids, the vitamins, the coenzymes, the inorganic salts, the nucleic acid derivatives, the hormones, the growth factors, the lipids and the sugars.

17. A method for the preservation of cells at low temperatures according to any of claims 13 to 16 wherein said cells are chosen from bacterial cells, yeast or fungal cells, animal cells and plant cells, or wherein said cells are comprised in a tissue, organ, embryo or organism.

18. Cryopreserved cells, tissues, organs, non-human embryos or non-human organisms obtainable by a method according to any of claims 13 to 17.
